# EUROPEAN PATENT APPLICATION

(11) **EP 2 034 660 A1**
(43) Date of publication of application: **11.03.2009**
(21) Application number: 07017685.4
(22) Date of filing: 10.09.2007
(51) Int. Cl.: H04L 12/18

(54) **Multicast delivery mechanism**

(71) Applicant: Nokia Siemens Networks Oy, 02610 Espoo (FI)
(72) Inventor: Gulbani, Giorgi, 02650 Espoo (FI); Jokinen, Joanna, 02760 Espoo (FI)
(74) Representative: Ungerer, Olaf

(57) **Abstract**

The present invention relates to a method, devices, computer program and system for signaling data packets in a cellular network. A multicast address and a set of tunnel endpoint identifiers are set for a predetermined service area of a cellular network. The multicast address is assigned to a group of access controlling devices of said cellular network, and a unique tunnel endpoint identifier is assigned to a terminal device. Then, the multicast address and the unique tunnel endpoint identifier are used for forwarding a multicast data packet via at least one of the access controlling devices to the terminal device within said service area.

## Description

### FIELD OF THE INVENTION

The present invention relates to a method, devices, computer program and system for signaling data packets in a cellular network.

### BACKGROUND

To enhance capabilities of 3GPP (3^{rd} Generation Partnership Project) systems to cope with the rapid growth in IP (Internet Protocol) data traffic, the packet-switched technology utilized within present 3G mobile networks requires further enhancement. Hence, a long-term evolution (LTE) of the 3GPP access technology is under consideration. LTE aims at reduced latency, higher user data rates, improved system capacity and coverage, and reduced overall cost for the operator. Additionally, it is expected that IP based 3GPP services will be provided through various access technologies. A mechanism to support seamless mobility between heterogeneous access networks, for example industrial wireless local area network (I-WLAN) and 3GPP access systems, is a useful feature for future network evolution. Further, system architecture evolution (SAE) concerns architectural considerations as end-to-end systems aspects, including core network aspects and the study of a variety of IP connectivity access networks.

As decided in 3GPP, ciphering function and/or compression function in user plane (also called U-plane and used for conveying data traffic) will be terminated in the access device of the wireless network (e.g. evolved Node B (eNB) or base station). For securing the traffic between the wireless network access device and the user plane element of the core network, such as an access gateway (SAE GW or aGW) of the evolved SAE packet core, a security association is needed e.g. for establishing a U-plane tunnel connection.

In unicast services, information packets are sent to a single destination. Consequently, the network needs to know exactly which radio network controller (RNC), or access device (e.g. base station or Node B or eNB) serves the UE in a given instant of time. Data exchange on the U-plane has been optimized by introducing advanced mechanisms, such as a direct tunnel solution (cf. 3GPP specification TS 23.060), an Internet high speed packet access (I-HSPA) functionality (cf. "lu with RNC U-Plane & C-Plane functions in Node-B" in 3GPP specification TR 25.999) and the LTE/SAE architecture (cf. 3GPP specification TS 23.401). However, in all these cases the U-plane tunnel bypasses intermediate control plane network elements, such as a serving GPRS (General Packet Radio services) support node (SGSN) or a mobility management element (MME), i.e. splits the control and the user plane functionalities of the network into different network elements.

However, these intermediate control plane network elements (e.g. SGSN or MME) may hide mobility of terminal devices (e.g. mobile terminals or user equipments (UE)) within a certain routing or tracking area from subsequent network elements in the uplink direction, such as a gateway GPRS support node (GGSN) and the aGW. Therefore, bypassing the intermediate control plane network element (e.g. SGSN or MME) in the U-plane (i.e. making control and user plane split) may significantly increase the amount of control plane messages towards the subsequent network element (e.g. GGSN or aGW). For instance, the SGSN needs to send a new U-plane IP address and U-plane tunnel endpoint identifier (TEID-U) to the GGSN with a context updating request (e.g. Update PDP Context Request message) every time the concerned terminal device moves to a new network controller device (e.g. radio network controller (RNC)) in the above direct tunnel case, or to a new Node B in the above I-HSPA case.

### SUMMARY

An enhanced signaling solution is thus needed to reduce signaling load in the uplink direction.

According to various embodiments, there is provided a method comprising:
- setting a multicast address and a set of tunnel endpoint identifiers for a predetermined service area of a cellular network;
- assigning said multicast address to a group of access controlling devices of said cellular network;
- assigning a unique tunnel endpoint identifier to a terminal device; and
- using said multicast address and said unique tunnel endpoint identifier for forwarding a multicast data packet via at least one of said access controlling devices to said terminal device within said service area.

Additionally, according to various embodiments, there is provided a network device configured to assign a pre-defined multicast address to a group of access devices within a predetermined service area of a cellular network, and to assign a unique tunnel endpoint identifier to a terminal device.

Furthermore, according to various embodiments, there is provided a gateway device configured to use a pre-defined multicast address and a unique tunnel endpoint identifier for transmitting a data packet to a terminal device within a predetermined service area of a cellular network.

In addition, according to various embodiments, there is provided an access controlling device configured to check based on a tunnel endpoint identifier of a received multicast packet whether said access device serves a terminal device to which said tunnel endpoint identifier is assigned, and to discard said multicast packet if said checking reveals that said terminal device is not served by said access controlling device.

Moreover, according to various embodiments, there is provided a system comprising:
- setting means for setting a multicast address and a set of tunnel endpoint identifiers for a predetermined service area of a cellular network;
- assigning means for assigning said multicast address to a group of access controlling devices of said cellular network and for assigning a unique tunnel endpoint identifier to a terminal device; and
- forwarding means for using said multicast address and said unique tunnel endpoint identifier for forwarding a multicast data packet via at least one of said access controlling devices to said terminal device within said service area.

Accordingly, context update messages are only required when a terminal device moves out of a the predetermined service area which may be defined by an operator by grouping access controlling devices. Therefore, while the terminal device moves within the service area, serving network devices, such as SGSN or MME, do not need to send a context update message (e.g. an Update PDP Context Request message) to gateway devices, such as GGSN or SAE GW, and consequently the gateway devices can continue sending their downlink user plane data to the same IP multicast address and TEID-U pair. This provides the advantage of a significant reduction of signaling load towards the gateway devices.

The access controlling devices may be configured or caused to join the multicast group to which the multicast address was assigned.

An intermediate router which does not support multicasting, e.g. which does not support a multicast stack, may drop a received multicast data packet. Additionally or alternatively, a multicast data packet may be dropped at an intermediate router if an addressed access controlling device has not joined the multicast group.

An access controlling device may check a received multicast packet based on the tunnel endpoint identifier as to whether the access controlling device serves a terminal device to which the tunnel endpoint identifier is assigned, and discard the multicast packet if the checking reveals that the terminal device is not served by the access controlling device.

Further advantageous modifications are defined in the dependent claims.

### BRIEF DESCRIPTION OF THE DRAWINGS

Other aspects and features will become apparent from the following detailed description considered in conjunction with the accompanying drawings. It is to be understood, however, that the drawings are designed solely for purposes of illustration and not as a definition of the limits of the invention, for which reference is to be made to the appended claims only. It should be further understood that the drawings are merely intended to conceptually illustrate the structures and procedures described herein. Therefore, any references to known networks are to be considered as examples provided as illustration.
- Fig. 1: shows high-level architecture for an evolved system in SAE;
- Fig. 2: shows a schematic processing and signaling flow diagram of a signaling method according to an embodiment;
- Fig. 3: shows a schematic processing and signaling flow diagram for mobility management according to an embodiment; and
- Fig. 4: shows a schematic block diagram of a signaling system according to an embodiment.

### DESCRIPTION OF EMBODIMENTS

Certain embodiments will now be explained in detail below with reference to the drawings attached hereto. The network elements, different networks, structure or the relative positions of these parts described in the embodiments, however, are only illustrative but not intended for limiting the scope of invention unless otherwise specified.

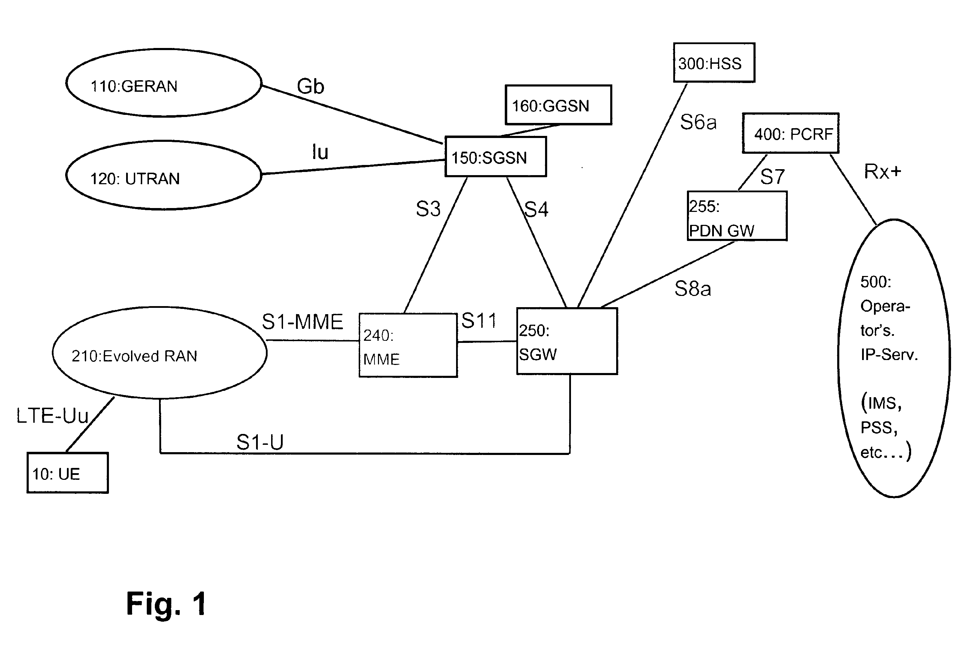

Now with reference to Fig. 1, the high level architecture for an evolved system according to the 3GPP long-term evolution (LTE) and system architecture evolution (SAE) is described. A network architecture baseline as the basis for further evolution of the architecture can be gathered from "3rd Generation Partnership Project; Technical Specification Group Services and System Aspects; GPRS enhancements for E-UTRAN access (Release 8)", 3GPP TR 23.401 V1.1.1 (2007-07).

There is generally a GPRS core network and an evolved packet core (EPC) network. User and bearer information exchange takes place between the GPRS Core network and the EPC network via an S3 link for inter 3GPP access system mobility in idle and/or active state. It is based on Gn reference point as defined between serving GPRS support nodes 150 (SGSNs). In GSM systems, for instance, the SGSN 150 keeps track of the location of an individual mobile terminal and performs security functions and access control. The SGSN 150 also exists in the UMTS network, where it connects to the radio network controller (RNC) over the lu-PS interface. The user plane has related control and mobility support between GPRS core network and a 3GPP anchor in the Serving Gateway (SGE) 250 via an S4 link, which may also be based on Gn reference point as defined between SGSN 150 and a gateway GPRS support node (GGSN) 160.

Further, the SGSN 150 is connected to a GSM EDGE radio access network (GERAN) 110 supporting the EDGE (Enhanced Data rates for Global Evolution) modulation technique which radio resources are connect via the Gb interface to the GPRS core network. Further, there is a UMTS Terrestrial Radio Access Network (UTRAN) 120 connected to the SGSN 150 via an lu interface. Access to radio resources of an evolved radio access network (eRAN) 210 is provided via a reference point S1-MME which constitutes a backhaul link for the transport of user plane and control plane traffic between access devices or base stations (i.e. eNBs) and the core network (i.e. SGW 250)..

By reference point S11 the user plane is provided with related control and mobility support between a mobility management element (MME) and the SGW 250.
Transfer of subscription and authentication data for authenticating/authorizing (AAA interface) user access to the evolved system is enabled via reference point S6a that connects a home subscriber server (HSS) 300. In general, the HSS 300 comprises many database functions that are required in next generation mobile networks. These functions may include the HLR (Home Location Register) and security and network access databases. Transfer of quality of service (QoS) policy and charging rules from policy charging rules function (PCRF) 400 to a policy and charging enforcement point (PCEP) is provided via reference point S7, a packet data network (PDN) gateway 255 and a reference point S8a. An operator's IP services network 500 may be an operator external public or private packet data network or an intra operator packet data network, for example for providing IP multimedia subsystem (IMS) services and the like. The IMS enables the support for IP multimedia applications.

IP multicast is a technique for many-to-many communication over an IP infrastructure. It scales to a larger receiver population by not requiring prior knowledge of who or how many receivers there are. The network infrastructure can thereby be used more efficiently by requiring the source to send a packet only once, even if it needs to be delivered to a large number of receivers. The nodes in the network take care of replicating the packet to reach multiple receivers only where necessary. To achieve this an IP multicast group address is required.

The IP multicast group address is used by sources and receivers to send and receive content. Sources use the group address as the IP destination address in their data packets. Receivers use this group address to inform the network that they are interested in receiving packets sent to that multicast group. For example, if some content is associated with multicast group "239.1.1.1", the source will send data packets destined to "239.1.1.1". Receivers for that content will inform the network that they are interested in receiving data packets sent to the multicast group "239.1.1.1", i.e., they "join" the multicast group "239.1.1.1". An example of a protocol which can be used by receivers to join a multicast group is called Internet Group Management Protocol (IGMP).
Once the receivers join a particular IP multicast group, a multicast distribution tree is constructed for that multicast group. A protocol which can be used for this is Protocol Independent Multicast (PIM). It sets up multicast distribution trees such that data packets from senders to a multicast group reach all receivers which have "joined" the group. E.g., all data packets sent to the multicast group "239.1.1.1" are received by receivers who joined the multicast group "239.1.1.1".

IP multicast does not require a source sending to a given group to know about the receivers of the group. The multicast tree construction is initiated by network nodes which are close to the receivers or is receiver driven.

According to an embodiment, IP multicast is used to reduce the initially described C-plane signalling load. A network operator may define a local IP multicast address and TEID-U range for downlink U-plane messages. A serving network element, such as the SGSN 150 or the MME 240 of Fig. 1, then assigns an IP multicast address to a specific group of access controlling devices, such as RNCs, or Node Bs, or eNBs, of a selected desired or predefined service area, and a unique TEID-U to each UE. The concerned access controlling devices join the defined IP multicast group. According to the Internet Engineering Task Force (IETF) specification RFC 4604, such a joining is necessary for IP multicast routers to allow the multicast data through. Gateway devices, such as the GGSN 160 or the SGW 250 may then use the asssigned IP multicast address for the selected service area and a specific TEID-U for the U-plane downlink data.

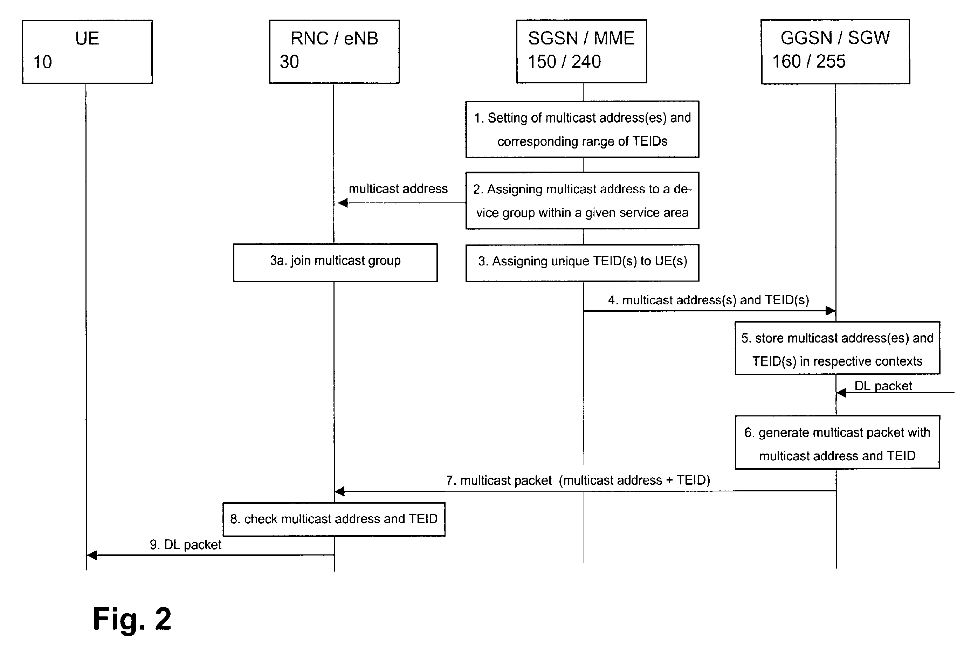

In the following, an embodiment is described in more detailed based on the signalling and processing diagram shown in Fig. 2.

According to Fig. 2, an operator sets in step 1 at least one multicast address and a corresponding range of TEID-Us for the proposed IP multicast signaling functionality. This setting can be performed at the SGSN 150 or MME 240 or other suitable serving network elements. Then, the SGSN 150 or MME 240 assigns one of the set multicast addresses to a device group within the selected or given service area (step 2). This multicast address can be signaled to the respective access controlling devices, e.g. RNC/eNB 30. Thus, a service area is defined by grouping RNCs, Node Bs and/or eNBs under the same IP multicast address. Therefore, while the UE 10 moves within the allocated service area, the SGSN 150 does not need to send Update PDP Context Request message to the GGSN 160 and consequently the GGSN 160 or SGW 250 can continue sending downlink U-plane data to the same IP multicast address and TEID-U pair.

In step 3, the SGSN 150 or MME 240 assigns (a) unique TEID-U(s) to respective UE(s). At the same time, the RNC/NodeB/eNB 30 which is member of the device group to which the multicast address has been assigned joins the multicast group as explained above (step 3a). Then, the assigned multicast address(es) and TEID(s) are forwarded in step 4 to the GGSN 160 or SGW 250, where they are stored, e.g. in respective context memories or look-up tables (step 5).

Now, when a downlink (DL) packet arrives at the GGSN 160 or SGW 250, a multicast packet can be generated in step 6 by using the multicast address and TEID-U of the concerned UE and service area. This multicast packet is then multicast to the group of access controlling devices allocated to the service area (step 7).

Hence, uplink C-plane signaling load can be reduced, as the SGSN 150 or MME 240 only needs to send the Update PDP Context Request message, if a UE moves out of the specified or selected service area.

General purpose IP routers (not shown) in between the GGSN 160 or SGW 250 and the RNC/NodeB/eNB 30 however will not let IP multicast packet through unless the routers support IP multicast stack and a concerned RNC/NodeB/eNB 30 has explicitly joined the given IP multicast group (IP multicast address) before the IP multicast packet sent in step 7 has reaches the router. Therefore, both routers and RNC/NodeB/eNB need to support the IP multicast functionality.

The IP multicast address and the TEID-U pair can be derived based on an SGSN/MME feature for selecting a particular pair from the operator-defined pool of multicast addresses and TEIDs. The assigned IP multicast address is shared by all RNCs/NodeBs/eNBs in the concerned service area, but the assigned TEID-U is UE specific. Therefore, the TEID-U of a received multicast packet indicates to the RNC/NodeB/eNB 30 to which UE the user plane data packet shall be forwarded. The RNC/NodeB/eNB 30 thus checks in step 8, whether it serves the UE to which the TEID-U is assigned. If the RNC/NodeB/eNB 30 does not serve the concerned UE, it silently discards the DL data. Otherwise, it forwards the DL data to the addressed UE 10.

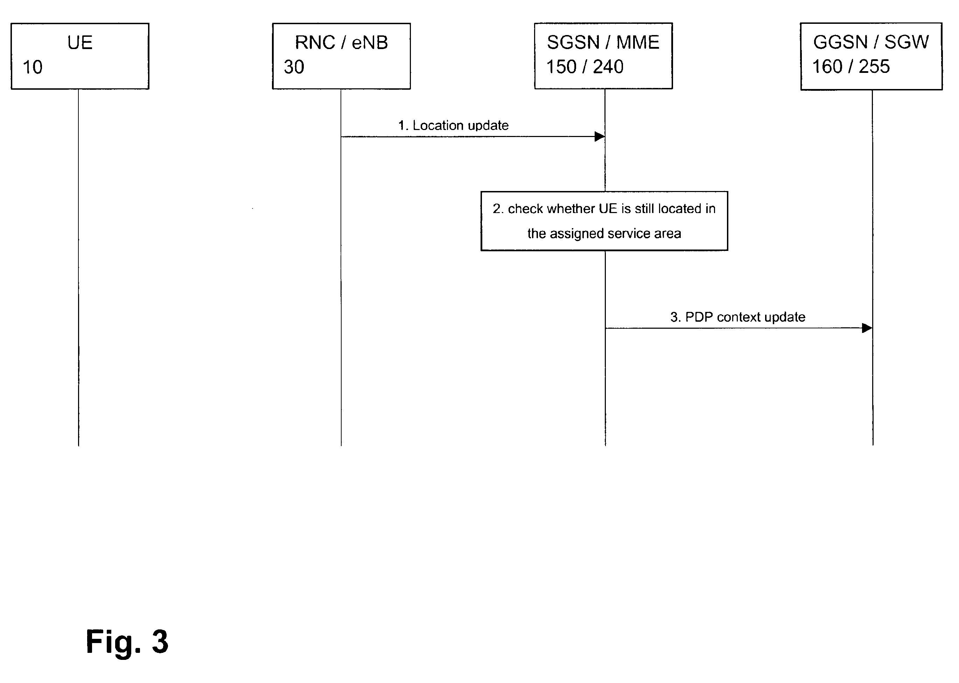

Fig. 3 shows a similar signalling and processing diagram for the case that a message indicating that a served UE has moved to another access controlling device (e.g. RNC or NodeB or eNB), e.g. a location update message, is received at the SGSN 150 or MME 240 (step 1). In response to such a receipt, the SGSN 150 or MME 240 checks in steep 2 whether the UE 10 is still located in the assigned service area. If the checking results indicates that the UE is no longer located within the assigned service area, a context updating message (e.g. PDP (Packet Date Protocol) Context Update) is forwarded to the GGSN 160 or SGW 250.

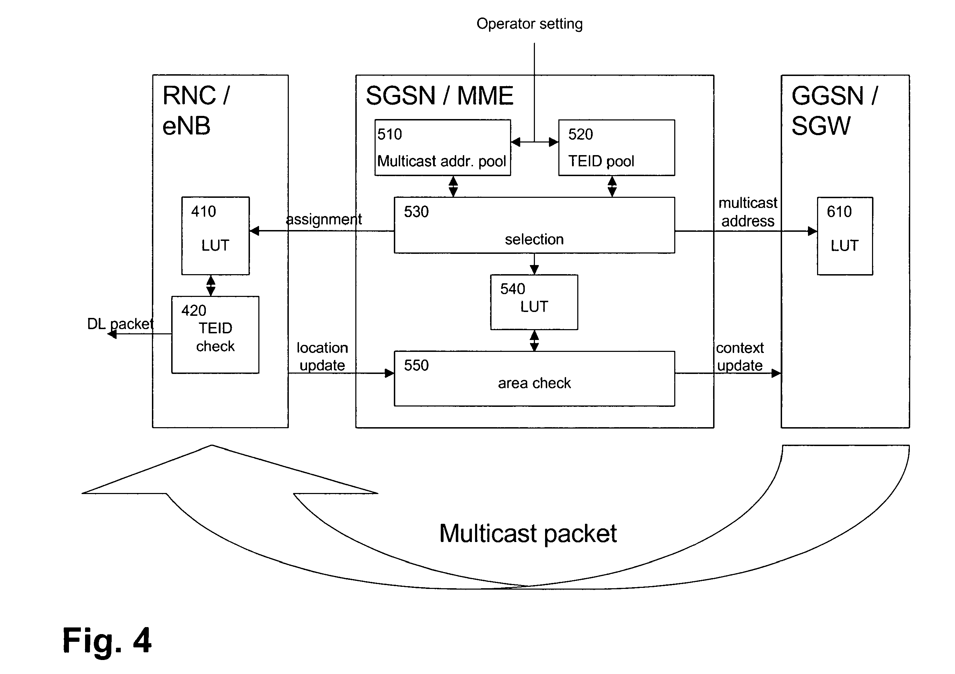

Fig. 4 shows a schematic block diagram indicating basic functionalities of the network elements involved in the proposed advanced signalling according to an embodiment. It is noted that only those functionalities involved in the proposed signalling procedures are depicted and other functionalities have been omitted for reasons of clarity and brevity.

Based on an operator setting functionality or input, a multicast address pool 510 and a TEID pool 520 can be set or loaded to the SGSN 150 or MME 240. A selection functionality 530 at the SGSN 150 or MME 240 is configured to select a multicast address for a desired service area and a unique or individual TEID-U for a served UE. This assignment is stored in a dedicated memory 540 (e.g. look-up table (LUT) or context memory) and can be signalled to the RNCs or Node Bs or eNBs within this service area, where the selected multicast address(es) and TEID-Us can be stored in a dedicated memory 410 (e.g. LUT). Additionally, the assigned multicast address can be signaled to the GGSN 160 or SGW 250, where it may be stored in a dedicated memory 610 (e.g. LUT or context memory).

The GGSN 160 or SGW 250 may now use the stored multicast address to generate a multicast packet to be forwarded to the RNCs or NodeBs or eNBs of the concerned service area. There, the TEID is checked in a corresponding checking functionality 420 based on the content of the dedicated memory 410. If the addressed UE is served by this RNC or NodeB or eNB, the DL data is forwarded to the addressed UE. Otherwise, the multicast packet is discarded.

When a location update message is received at the SGSN 150 or MME 240, an area checking functionality 550 checks whether the concerned UE is still located within the assigned service area of the multicast address. If the UE has moved outside the assigned service area, a context update message is generate and forwarded to the GGSN 160 or SGW 250.

It is noted that the functionalities indicated in Fig. 4 can be implemented as discrete hardware circuits or alternatively as software routines stored in a computer memory and adapted to control a computer or processor device so as to produce the steps underlying these functionalities or explained in connection with Figs. 2 and 3.

To summarize, a method, devices, computer program and system for signaling data packets in a cellular network has been described. A multicast address and a set of tunnel endpoint identifiers are set for a predetermined service area of a cellular network. The multicast address is assigned to a group of access controlling devices of said cellular network, and a unique tunnel endpoint identifier is assigned to a terminal device. Then, the multicast address and the unique tunnel endpoint identifier are used for forwarding a multicast data packet via at least one of the access controlling devices to the terminal device within said service area.

While there have been shown and described and pointed out fundamental features of the invention as applied to the embodiments thereof, it will be understood that various omissions and substitutions and changes in the form and details of the apparatus and method described may be made by those skilled in the art without departing from the present invention. For example, it is expressly intended that all combinations of those elements and/or method steps, which perform substantially the same function in substantially the same way to achieve the same results, be within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of designed choice. It is the intention, therefore, to be limited only as indicated by the scope of the claims appended hereto.

## Claims

1. A method comprising:
a) setting a multicast address and a set of tunnel endpoint identifiers for a predetermined service area of a cellular network;
b) assigning said multicast address to a group of access controlling devices of said cellular network;
c) assigning a unique tunnel endpoint identifier to a terminal device; and
d) using said multicast address and said unique tunnel endpoint identifier for forwarding a multicast data packet via at least one of said access controlling devices to said terminal device within said service area.

2. Method according to claim 1, further comprising causing said access controlling devices to join a multicast group.

3. Method according to claim 1, further comprising transmitting a context updating request only when said terminal device moves out of said service area.

4. Method according to claim 1, further comprising dropping a multicast data packet at an intermediate router if said router does not support multicasting.

5. Method according to claim 2, further comprising dropping a multicast data packet at an intermediate router if an addressed access controlling device has not joined said multicast group.

6. Method according to claim 1, further comprising checking at an access controlling device based on the tunnel endpoint identifier of a multicast packet whether said access controlling device serves a terminal device to which said tunnel endpoint identifier is assigned, and discarding said multicast packet if said checking reveals that said terminal device is not served by said access controlling device.

7. Method according to claim 1, wherein said access controlling device is a radio network controller, a node B device, or a base station device.

8. A network device configured to assign a pre-defined multicast address to a group of access devices within a predetermined service area of a cellular network, and to assign a unique tunnel endpoint identifier to a terminal device.

9. Network device according to claim 8, wherein said network device comprises setting means for setting said pre-defined multicast address and a range of tunnel endpoint identifiers for at least one service area.

10. Network device according to claim 8, wherein said network device has a mobility management functionality within said cellular network.

11. Network device according to claim 8, wherein said network device is configured to transmit a context updating request only when said terminal device moves out of said service area.

12. Network device according to claim 11, wherein said network device is a Serving General Packet Radio Services Support Node or a Mobility Management Element.

13. A gateway device configured to use a pre-defined multicast address and a unique tunnel endpoint identifier for transmitting a data packet to a terminal device within a predetermined service area of a cellular network.

14. Gateway device according to claim 13, wherein said gateway device is a Gateway General Packet Radio Services Support Node or a System Architecture Evolution Gateway.

15. An access controlling device configured to check based on a tunnel endpoint identifier of a received multicast packet whether said access device serves a terminal device to which said tunnel endpoint identifier is assigned, and to discard said multicast packet if said checking reveals that said terminal device is not served by said access controlling device.

16. Access controlling device according to claim 15, wherein said access controlling device is a radio network controller, a node B device, or a base station device.

17. Computer program stored on a computer readable medium and comprising code means for generating the steps of method claim 1 when run on a computer device.

18. A system comprising:
a) setting means for setting a multicast address and a set of tunnel endpoint identifiers for a predetermined service area of a cellular network;
b) assigning means for assigning said multicast address to a group of access controlling devices of said cellular network and for assigning a unique tunnel endpoint identifier to a terminal device; and
c) forwarding means for using said multicast address and said unique tunnel endpoint identifier for forwarding a multicast data packet via at least one of said access controlling devices to said terminal device within said service area.
